# NEUE EUROPÄISCHE PATENTSCHRIFT

(11) **EP 0 674 470 B2**
(45) Veröffentlichungstag und Bekanntmachung des Hinweises auf die Entscheidung über den Einspruch: **07.04.2004**
(45) Hinweis auf die Patenterteilung: 06.08.1997
(21) Anmeldenummer: 95101884.5
(22) Anmeldetag: 11.02.1995
(51) Int. Cl.: H05F 3/00, H05F 1/02

(54) **Verfahren zur Herstellung eines Behälter aus thermoplastischem Kunststoff für die Aufnahme von sicherheitsbedürftigen fliessfähigen Medien**
Process for producing a container made of thermoplastic, synthetic material for carrying hazardous fluid materials
Procédé pour la fabrication d'un récipient en matière thermoplastique synthétique pour contenir des matériaux fluides exigeant de la sécurité

(30) Priorität: 25.03.1994 DE 9405092 U; 24.12.1994 DE 4446585
(43) Veröffentlichungstag der Anmeldung: 27.09.1995
(73) Patentinhaber: SOTRALENTZ S.A., F-67320 Drulingen (FR)
(72) Erfinder: Pfeiffer, Pierre, F-67320 Drulingen (FR)
(74) Vertreter: Honke, Manfred, Dr.-Ing.

(56) Entgegenhaltungen:
- EP-A- 0 499 052
- WO-A-93/09650
- DE-A- 2 500 539
- DE-A- 2 942 995
- DE-A- 3 214 940
- DE-A- 3 827 628
- DE-U- 8 519 765
- FR-A- 2 072 613
- GB-A- 1 479 590
- GB-A- 2 101 559
- JP-A- 4 267 748
- JP-A- 5 174 991
- US-A- 5 002 194
- Kunststoffberater 1977, Heft 5, Seiten 262-265

## Beschreibung

Die Erfindung betrifft ein Verfahren zur Herstellung eines Behälters aus thermoplastischem Kunststoff für die Aufnahme von in bezug auf Entflammung und/oder Explosion sicherheitsbedürftigen fließfähigen Medien, wobei der Behälter zunächst im Wege der Blasformgebung hergestellt wird. Die Erfindung betrifft insbesondere ein Verfahren zur Herstellung eines solchen Behälters, der als Palettenbehälter ausgeführt, d.h. auf einer Palette aufsteht und von einem Drahtgittermantel umgeben ist.

Bei den fließfähigen Medien kann es sich um Flüssigkeiten, um Gase oder auch um feinteilige Medien handeln. Die elektrostatische Aufladung ist bekanntlich eine Reibungsaufladung. Sie kann verhältnismäßig hohe Spannungen und beachtliche Energien aufbauen, so daß eine Funkenentladung zu zündfähigen Funken führt. Die Reibungsaufladung entsteht insbesondere beim Befüllen des Behälters mit einem fließfähigen Medium bzw. beim Entleeren des Behälters.

Um zu verhindern, daß Behälter aus thermoplastischem Kunststoff sich beim Befüllen oder Entleeren mit einem fließfähigen Medium elektrostatisch aufladen, ist es bekannt, den thermoplastischen Kunststoff, aus dem der Behälter im Wege der Blasformgebung hergestellt ist, mit leitfähigen Materialien zu vermischen, beispielsweise mit Kohlenstoffpartikeln zu vermischen, und dadurch insgesamt leitfähig zu gestalten.

Die bekannten Maßnahmen sind aufwendig, weil nicht ein und dieselbe Kunststoffmischung für die Herstellung von Behältern eingesetzt werden kann, die der antistatischen Ausrüstung nicht bedürfen bzw. der antistatischen Ausrüstung bedürfen. Auch beeinträchtigt die Zumischung der leitfähigen Substanzen in die Matrix des Kunststoffes unter Umständen die Festigkeit des Behälters. Außerdem ist es nicht möglich einen elektrischen Widerstand zwischen Korb und Blase von etwa 0,1 Ohm zu erreichen. Mit einer Zumischung von Ruß kommt man höchstens auf ca. 10.000 Ohm. Dieser Wert ist zu hoch und kann die Entstehung von Funken durch elektrostatische Entladung nicht verhindern.

Der Erfindung liegt das technische Problem zugrunde, ein Verfahren der eingangs genannten Art anzugeben, mit dem auf einfache Weise ein Behälter der eingangs angegebenen Zweckbestimmung aus einem üblichen, nicht antistatisch ausgerüstetem Kunststoff hergestellt werden kann, welcher Behälter in fertigungsmäßiger Hinsicht allen Anforderungen entspricht und bei dem eine Entflammung und/oder Explosion der fließfähigen Medien aufgrund von Reibungsladung nicht mehr stattfinden kann. - Zur Lösung dieses technischen Problems ist Gegenstand der Erfindung ein Verfahren zur Herstellung eines Behälters aus thermoplastischem Kunststoff für die Aufnahme von in bezug auf Entflammung und/oder Explosion sicherheitsbedürftigen fließfähigen Medien, wobei der Behälter zunächst im Wege der Blasformgebung hergestellt wird, wobei im Anschluß an die Blasformgebung zumindest bereichsweise eine Beschichtung aus leitfähigem Pulver auf die Außenoberfläche des Behälters aufgebracht wird, wobei die Beschichtung aus leitfähigem Pulver mit Hilfe eines Plasmastrahls in die Oberfläche des Behälters eingesintert wird, und wobei der Sintervorgang so geführt ist, daß die Beschichtung eine zur Verhinderung einer elektrostatischen Aufladung ausreichende elektrische Leitfähigkeit aufweist. In dem Merkmal, daß der Sintervorgang so geführt wird, daß die Beschichtung eine zur Verhinderung einer elektrostatischen Aufladung ausreichende elektrische Leitfähigkeit aufweist, kommt gleichsam als Abstimmungsregel dahingehend zum Ausdruck, daß eine ausreichende Menge des leitfähigen Pulvers verwendet werden muß, und daß der Sintervorgang so geführt werden muß, daß diese Menge des leitfähigen Pulvers aufgenommen wird, d.h. dauerhaft eingesintert wird. Es versteht sich, daß eine Schädigung des thermoplastischen Kunststoffes des Behälters vermieden werden muß.

Aus DE-A-32 14 940 ist es bekannt, eine biegsame Folie aus einem Werkstoff mit relativ hohem Oberflächenwiderstand mit einer offenen Matrix aus elektrisch leitfähiger Druckfarbe zu bedrucken. Diese Folie dient zum Umwickeln oder Verpacken elektronischer Bauelemente und soll diese Bauelemente gegen die schädlichen Einflüsse von elektrostatischen Aufladungen schützen. Auf Kunststoffbehälter für die Aufnahme von sicherheitsbedürftigen fließfähigen Medien hat dieser Stand der Technik keinen Einfluß genommen. Im übrigen ist es aus DE-A-29 42 995 bekannt, einen transparenten Kunststoffhohlkörper, der als explosionsgeschützte Lampenabdeckung dient, mit einer transparenten Kunststoffolie zu verschweißen, die durch leitfähige Streifen in schmale Zonen unterteilt ist. Hierdurch sollen elektrostatische Aufladungen dauerhaft beseitigt werden. Diese bekannten Maßnahmen sind aufwendig, da zunächst die Kunststoffolie mit den eingearbeiteten Streifen hergestellt werden muß und anschließend diese Kunststoffolie in einem weiteren Arbeitsschritt auf den Kunststoffkörper geschweißt werden muß. Außerdem hat auch dieser Stand der Technik keinen Einfluß auf Verfahren zur Herstellung von Kunststoffbehältern für die Aufnahme von sicherheitsbedürftigen fließfähigen Medien genommen.

Die Erfindung geht von der Erkenntnis aus, daß es zur antistatischen Ausrüstung eines im Wege der Blasformgebung hergestellten Behälters aus thermoplastischem Kunststoff nicht erforderlich ist, antistatisch wirkende Substanzen in den Kunststoff schon vor der Extrusion bzw. der Blasformgebung einzumischen. Es ist überraschenderweise ausreichend, in der beschriebenen Weise Beschichtungen aus leitfähigem Pulver lediglich in die Oberfläche zu integrieren. Die Festigkeit des Behälters ingesamt wird dadurch nicht störend beeinflußt.

Im einzelnen kann ein nach dem erfindungsgemäßen Verfahren hergestellter Behälter auf verschiedene Weise ausgebildet und gestaltet sein. Durch Einfachheit und Funktionssicherheit zeichnet sich eine Ausführungsform aus, bei der die Beschichtung den oberen Bereich des Behälters vollständig abdeckend, z.B. den Behältermantel in der oberen Hälfte oder im oberen Drittel und außerdem die obere Behälterabschlußwand abdeckend, aufgebracht wird. Eine Ausführungsform, die es erlaubt, mit einer geringen Menge von leitendem Pulver auszukommen, ist dadurch gekennzeichnet, daß die Beschichtung aus sich kreuzenden, bandförmigen Sicherheitsstreifen aufgebracht wird, die den oberen Bereich des Behälters umgeben oder aber den Behälter in vertikaler und in horizontaler Richtung vollständig umreifen. Es versteht sich, daß hier die Kreuzungsstellen der bandförmigen Streifen miteinander leitend vereinigt sind, was beim Aufsintern erfolgt. - Im allgemeinen wird man bei einem erfindungsgemäßen Behälter die Beschichtung in Form eines Metallpulvers, z.B. einem Kupfer- und/oder Zinkpulvers, aufbringen.

Behälter des beschriebenen Aufbaues und der beschriebenen Zweckbestimmung werden häufig als Palettenbehälter eingesetzt. Sie besitzen als solche eine Palette aus Holz, Kunststoff oder Stahl und einen Drahtgittermantel aus einem Drahtgitter, wie es auch als Bewehrungsdrahtgitter im Stahlbetonbau üblich ist. Hier empfiehlt die Erfindung, daß die Beschichtung durch Anliegen mit dem Drahtgittermantel mit diesem in Verbindung gebracht wird. Das bewirkt gleichsam eine "Erdung" der Beschichtung, was insbesondere dann gilt, wenn die Palette als Stahlpalette ausgeführt ist.

Im Rahmen des erfindungsgemäßen Verfahrens wird zunächst der blasgeformte Behälter aus thermoplastischem Kunststoff hergestellt. Danach, d.h. nach seiner Fertigstellung, wird die Oberflächenhaut des Behälters zumindest im Bereich der aufzubringenden Beschichtung "aufgebrochen" und in die aufgebrochene Oberflächenhaut wird das leitfähige Pulver eingebracht. Das Aufbrechen erfolgt durch Plasmabestrahlung, kann aberauch durch Beflammung oder Koronaentladung erfolgen. In allen Fällen besteht die Möglichkeit, gleichzeitig mit dem Aufbrechen der Oberflächenhaut das leitfähige Pulver einzubringen, das mit dem Plasmastrahl auf die Oberfläche des Behälters gleichsam aufgestrahlt oder aufgeschossen wird.

Im folgenden wird die Erfindung anhand einer lediglich ein Ausführungsbeispiel eines nach dem erfindungsgemäßen Verfahren hergestellten Behälters darstellenden Zeichnung ausführlicher erläutert. Es zeigen in schematischer Darstellung
- Fig. 1: eine Seitenansicht eines erfindungsgemäßen Behälters,
- Fig. 2: eine Stirnansicht des Gegenstandes der Fig. 1,
- Fig. 3: eine Draufsicht auf den Gegenstand der Fig. 1 und 2 und
- Fig. 4: entsprechend der Fig. 1 einen Palettenbehälter mit erfindungsgemäß ausgebildetem Behälter aus thermoplastischem, Kunststoff,
- Fig. 5: eine Draufsicht auf den Gegenstand nach Fig. 4.

Der in den Figuren dargestellte Behälter 1 wurde im Wege der Blasformgebung aus thermoplastischem Kunststoff geformt. Er ist für die Aufnahme von in bezug auf Entflammung und/oder Explosion sicherheitsbedürftigen fließfähigen Medien bestimmt.

Die Außenoberfläche des Behälters 1 weist ein nach der Blasformgebung aufgebrachtes Netz aus sich kreuzenden, bandförmigen Sicherheitsstreifen 2 auf. Die Sicherheitsstreifen 2 bestehen aus einem leitfähigen Pulver. Bei dem leitfähigen Pulver mag es sich um ein Metallpulver handeln. Der Sintervorgang ist so geführt, daß der Sicherheitsstreifen 2 eine für die Verhinderung der elektrostatischen Aufladung ausreichende elektrische Leitfähigkeit aufweist. Das bedeutet, daß die Sicherheitsstreifen 2 ausreichend breit sind und eine ausreichende Menge an leitfähigem Pulver aufweisen. Als leitfähiges Pulver wird vorzugsweise Kupferpulver und/oder Zinkpulver verwendet. Aus Maßstabsgründen nicht erkennbar ist die Tatsache, daß die Oberflächenhaut des Behälters 1 zumindest im Bereich der Sicherheitsstreifen 2, z. B. durch eine Beflammung oder eine Koronaentladung, aufgebrochen sein kann. Das verbessert die Haftung des leitfähigen Pulvers in den Sicherheitsstreifen 2. Das leitfähige Pulver wird mit Hilfe eines Plasmastrahls eingesintert. Die Sicherheitsstreifen 2 müssen ausreichend breit angelegt sein.

Im Ausführungsbeispiel und nach bevorzugter Ausführungsform der Erfindung mag die Maschenweite des Netzes der Sicherheitsstreifen 2 maximal 15 cm, vorzugsweise jedoch 10 cm oder weniger, betragen. Im Rahmen der Erfindung können die Normen für den elektrostatischen Schutz an Kunststoffoberflächen ohne weiteres eingehalten werden. Sie verlangen z. B. eine Größe der eingegrenzten Fläche von 100 cm². Das erlaubt Flächen von z. B. 10 cm x 10 cm, aber auch von 5 cm x 20 cm.

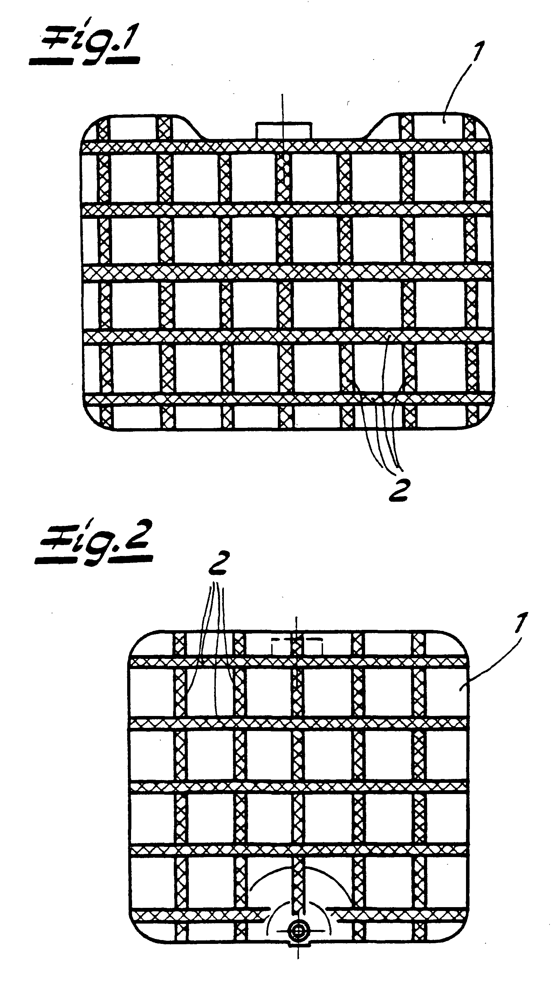

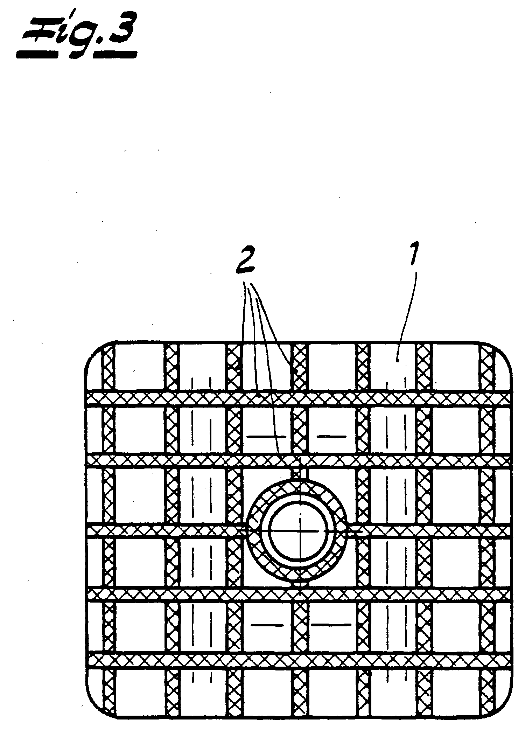

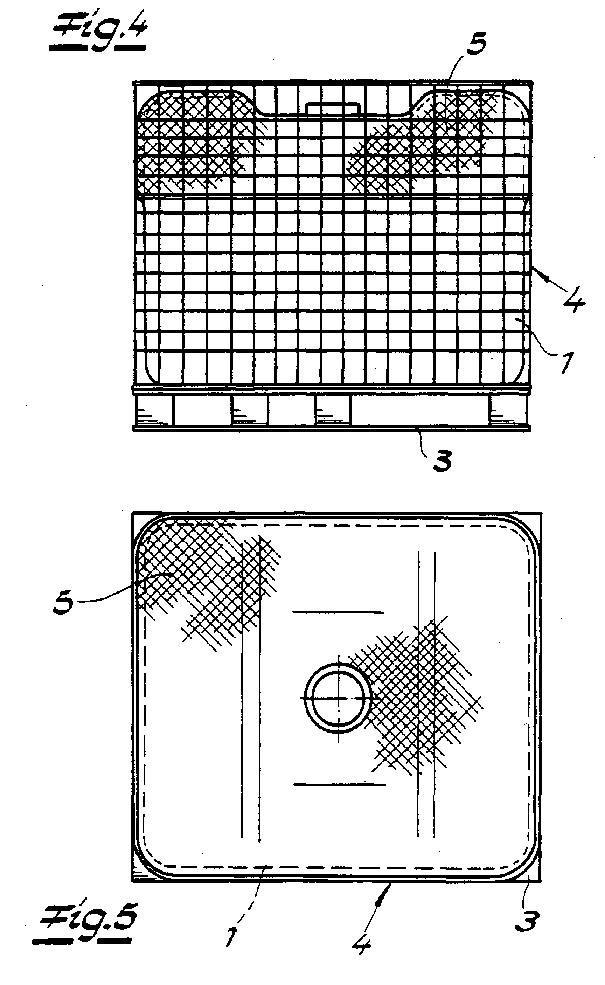

Die Fig. 4 und 5 zeigen einen erfindungsgemäßen Behälter 1 in der Ausführungsform als Palettenbehälter mit Palette 3 aus Holz, Kunststoff oder Stahl und mit Drahtgittermantel 4. In den Drahtgittermantel 4 ist der Behälter 1 aus thermoplastischem Kunststoff eingesetzt. Bei dieser Ausführungsform ist die Beschichtung nicht in Form eines Netzes aus sich kreuzenden Sicherheitsstreifen 2 aufgebaut, sondern vielmehr als geschlossene Beschichtung 5, die den Behältermantel im oberen Drittel umgibt. Aus der Fig. 5 entnimmt man, daß die Beschichtung 5 durch Anliegen an dem Drahtgittermantel 4 mit dem Drahtgittermantel 4 in Verbindung steht und gleichsam geerdet ist. Es versteht sich, daß man bei dieser Ausführungsform in der Beschichtung 5 einen Sichtstreifen aussparen kann. Sowohl bei der Ausführungsform nach den Fig. 1 bis 3, als auch bei der Ausführungsform nach den Fig. 4 und 5 ist der Drahtgittermantel 4 zweckmäßigerweise verzinkt. Das gilt auch für die Palette, wenn sie aus Stahl besteht. Die Verzinkung verbessert die Ableitung einer eventuellen elektrostatischen Aufladung.

## Patentansprüche

1. Verfahren zur Herstellung eines Behälters aus thermoplastischem Kunststoff für die Aufnahme von in bezug auf Entflammung und/oder Explosion sicherheitsbedürftigen fließfähigen Medien, wobei der Behälter zunächst im Wege der Blasformgebung hergestellt wird,
wobei im Anschluß an die Blasformgebung zumindest bereichsweise eine Beschichtung aus leitfähigem Pulver auf die Außenoberfläche des Behälters aufgebracht wird, wobei die Beschichtung aus leitfähigem Pulver mit Hilfe eines Plasmastrahls in die Oberfläche des Behälters eingesintert wird,
und wobei der Sintervorgang so geführt wird, daß die Beschichtung eine zur Verhinderung einer elektrostatischen Aufladung ausreichende elektrische Leitfähigkeit aufweist.

2. Verfahren nach Anspruch 1, wobei die Beschichtung, den oberen Bereich des Behälters vollständig abdeckend, aufgebracht wird.

3. Verfahren nach Anspruch 1, wobei die Beschichtung in Form von sich kreuzenden, bandförmigen Sicherheitsstreifen aufgebracht wird.

4. Verfahren nach Anspruch 3, wobei die Sicherheitsstreifen, den Behälter in vertikaler und in horizontaler Richtung vollständig umreifend, aufgebracht werden.

5. Verfahren nach einem der Ansprüche 1 bis 4, wobei eine Beschichtung aus einem Metallpulver, z. B. einem Kupfer und/oder Zinkpulver, aufgebracht wird.

6. Verfahren nach einem der Ansprüche 1 bis 5, wobei der Behälter als Palettenbehälter mit Palette aus Holz, Kunststoff oder Stahl und Drahtgittermantel hergestellt wird, wobei die Beschichtung durch Anliegen mit dem Drahtgittermantel in Verbindung gebracht wird.

## Claims

1. A process for producing a container made of synthetic thermoplastic material for the receipt of free-flowing media which are in need of protection as regards ignition and/or explosion, wherein the container is first produced by a blow-moulding route,
wherein following blow-moulding, a coating of conductive powder is applied at least regionally to the external surface of the container, wherein the coating of conductive powder is sintered into the surface of the container with the aid of a plasma jet,
and wherein the sintering operation is conducted so that the coating has an electrical conductivity which is sufficient to prevent electrostatic charging.

2. A process according to claim 1, wherein the coating is applied so that it completely covers the upper region of the container.

3. A process according to claim 1, wherein the coating is applied in the form of safety strips in the form of straps which cross each other.

4. A process according to claim 3, wherein the safety strips are applied so that they loop completely round the container in the vertical and horizontal directions.

5. A process according to any one of claims 1 to 4, wherein a coating of a metal powder is applied, e.g. of a copper and/or zinc powder.

6. A process according to any one of claims 1 to 5, wherein the container is produced as a palletised container with a pallet made of wood, synthetic material or steel and with a wire grid cage, wherein the coating is connected to the wire grid cage by a close fit.

## Revendications

1. Procédé de fabrication d'un récipient en matière thermoplastique synthétique pour contenir des matériaux fluides exigeant d'être protégés contre l'inflammation et/ou l'explosion, dans lequel le récipient est d'abord fabriqué par moulage par soufflage, un revêtement de poudre conductrice est appliqué au moins par endroits sur la surface extérieure du récipient à la suite du moulage par soufflage, le revêtement en poudre conductrice est intégré par frittage à la surface du récipient à l'aide d'un jet de plasma, et l'opération de frittage est conduite de façon que le revêtement présente une conductibilité électrique suffisante pour s'opposer à une charge électrostatique.

2. Procédé selon la revendication 1, dans lequel le revêtement est appliqué de façon à recouvrir entièrement la zone supérieure du récipient.

3. Procédé selon la revendication 1, dans lequel le revêtement est appliqué sous la forme de bandes de sécurité en forme de rubans entrecroisés.

4. Procédé selon la revendication 3, dans lequel les bandes de sécurité sont appliquées de façon à cercler entièrement le récipient dans les directions verticale et horizontale.

5. Procédé selon l'une des revendications 1 à 4, dans lequel le revêtement appliqué est constitué de poudre métallique, par exemple de poudre de cuivre et/ou de zinc.

6. Procédé selon l'une des revendications 1 à 5, dans lequel le récipient est réalisé sous la forme d'un récipient palettisé avec palette en bois, matière synthétique ou acier et enveloppe en treillis métallique, le revêtement étant solidarisé par contact à l'enveloppe en treillis métallique.
